# EUROPEAN PATENT APPLICATION

(11) **EP 1 970 420 A1**
(43) Date of publication of application: **17.09.2008**
(21) Application number: 07104276.6
(22) Date of filing: 15.03.2007
(51) Int. Cl.: C09D 175/04, C08G 18/02, C08G 18/10, C08G 18/22

(54) **Polyisocyanate-based adhesive composition**

(71) Applicant: HUNTSMAN INTERNATIONAL LLC, Salt Lake City, Utah 84108 (US)
(72) Inventor: The designation of the inventor has not yet been filed
(74) Representative: Swinnen, Anne-Marie

(57) **Abstract**

Adhesive prepared by reacting an organic polyisocyanate with a compound containing isocyanate-reactive hydrogen atoms in the presence of a trimerisation catalyst.

## Description

The present invention relates to adhesive compositions based on polyisocyanate.

Adhesives based on compounds containing more than one isocyanate group per molecule and on compounds containing more than one hydroxyl group per molecule, so-called polyurethane adhesives or polyisocyanate-based adhesives, are used in many application areas due to their outstanding properties, their simple and economical processing and their high strength. One of these application areas is flexible packaging were a laminated film or sheet produced using an adhesive is used.

However for some applications the crosslink density of standard polyurethane adhesives is too low, preventing the material to be used in severe climatically conditions. For example car body adhesives should have high heat and salt water resistance.

For other applications such as flexible food packaging the cure rate of polyurethane adhesives is very slow, requiring prolonged storage of the final laminate so as to reduce the amount of migratable aromatic amines below the legally required limit.

It is an object of the invention to provide an adhesive composition based on polyisocyanates not having the disadvantages mentioned above.

The present invention provides a polyisocyanate based adhesive, which adhesive is characterised in that it is prepared by reacting an organic polyisocyanate with a compound containing isocyanate-reactive hydrogen atoms in the presence of a trimerisation catalyst.

A polyisocyanurate-based adhesive is obtained showing the benefit of extremely fast cure and therefore fast handling strength. Furthermore the extremely high crosslink density (compared to polyurethane-based adhesives) increases the strength of the bond as well as the resistance against media and creep. A faster reduction of aromatic amine in the cured film can be achieved, which is extremely valuable in food and medical related applications.

The polyisocyanate used in the present invention may comprise any number of polyisocyanates, including but not limited to, toluene diisocyanates (TDI), diphenylmethane diisocyanate (MDI) - type isocyanates, and prepolymers of these isocyanates. Preferably the polyisocyanate has at least two aromatic rings in its structure, and is a liquid product. Polymeric isocyanates having a functionality greater than 2 are preferred.

The diphenylmethane diisocyanate (MDI) used in the present invention can be in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, or any of their derivatives having a urethane, isocyanurate, allophonate, biuret, uretonimine, uretdione and/or iminooxadiazinedione groups and mixtures of the same.

Examples of other suitable polyisocyanates are tolylene diisocyanate (TDI), hexamethylene diisocyanate (HMDI), isophorone diisocyanate (IPDI), butylene diisocyanate, trimethylhexamethylene diisocyanate, di(isocyanatocyclohexyl)methane, isocyanatomethyl-1,8-octane diisocyanate and tetramethylxylene diisocyanate (TMXDI).

Preferred polyisocyanates for the invention are the semi-prepolymers and prepolymers which may be obtained by reacting polyisocyanates with compounds containing isocyanate-reactive hydrogen atoms. Examples of compounds containing isocyanate-reactive hydrogen atoms include alcohols, glycols or even relatively high molecular weight polyether polyols and polyester polyols, mercaptans, carboxylic acids, amines, urea and amides. Particularly suitable prepolymers are reaction products of polyisocyanates with monohydric or polyhydric alcohols.
The prepolymers are prepared by conventional methods, e.g. by reacting polyhydroxyl compounds which have a molecular weight of from 400 to 5000, in particular mono- or polyhydroxyl polyethers, optionally mixed with polyhydric alcohols which have a molecular weight below 400, with excess quantities of polyisocyanates, for example aliphatic, cycloaliphatic, araliphatic, aromatic or heterocyclic polyisocyanates.
Given as examples of the polyether polyols are polyethylene glycol, polypropylene glycol, polypropylene glycol-ethylene glycol copolymer, polytetramethylene glycol, polyhexamethylene glycol, polyheptamethylene glycol, polydecamethylene glycol, and polyether polyols obtained by ring-opening copolymerisation of alkylene oxides, such as ethylene oxide and/or propylene oxide, with isocyanate-reactive initiators of functionality 2 to 8.
Polyester diols obtained by reacting a polyhydric alcohol and a polybasic acid are given as examples of the polyester polyols. As examples of the polyhydric alcohol, ethylene glycol, polyethylene glycol, tetramethylene glycol, polytetramethylene glycol, 1,6-hexanediol, 3-methyl-1,5-pentanediol, 1,9-nonanediol, 2-methyl-1,8-octanediol, and the like can be given. As examples of the polybasic acid, phthalic acid, dimer acid, isophthalic acid, terephthalic acid, maleic acid, fumaric acid, adipic acid, sebacic acid, and the like can be given.
Preferably the polyol used to prepare the prepolymer is one that leads to improved miscibility between the polyisocyanate and the isocyanate-reactive compound in the final formulation.
In a particularly preferred embodiment of the invention prepolymers are used as the polyisocyanate component having an average functionality of 2 to 2.9, preferably 2.0 to 2.5, a maximum viscosity of 6000 mPa s, and an isocyanate content of 6 to 30 wt%, preferably 10 to 26 wt%.

The second component in the present adhesive formulation is an isocyanate-reactive compound. Any of the above mentioned compounds can be used.

The best adhesive performance is obtained when both components, the polyisocyanate and the isocyanate-reactive compound are easily miscible with each other. In this respect good miscibility means a clear solution after good mixing.

Further it has been observed that the softblock content of the adhesive has a dramatic influence on the adhesive performance. Perferably the softblock content is between 20 and 70 % by weight, most preferably between 40 and 60 wt%.
Softblock content is determined as the wt% of isocyanate-reactive compounds present as such and/or present in the prepolymer, that have a molecular weight above 500.

Hence either a prepolymer is used which has itself a fairly high softblock content and/or a high amount of an isocyanate-reactive compound having a MW > 500 is used.

The third component of the present adhesive formulation is a catalyst that promotes the trimerisation of isocyanates.
As the trimerisation catalyst there can be used all of such known catalysts as tetraalkylammonium hydroxides (e.g. tetramethylammonium hydroxide, tetraethylammonium hydroxide and tetrabutylammonium hydroxide), organic weak acid salts (e.g. tetramethylammonium acetate, tetraethylammonium acetate and tetrabutylammonium acetate), trialkylhydroxyalkylammonium hydroxides (e.g. trimethylhydroxypropylammonium hydroxide, trimethylhydroxyethylammonium hydroxide, triethylhydroxypropylammonium hydroxide and triethylhydroxyethylammonium hydroxide), organic weak acid salts (e.g. trimethylhydroxypropylammonium acetate, trimethylhydroxyethylammonium acetate, triethylhydroxypropylammonium acetate and triethylhydroxyethylammonium acetate), tertiary amines (e.g. triethylamine, triethylenediamine, 1,5-diaza-bicyclo[4.3.0]nonene-5,1,8-diazabicyclo[5.4.0]-undecene-7 and 2,4,6-tris(dimethylaminomethyl)phenol), metal salts of alkylcarboxylic acids (e.g. acetic acid, caproic acid, caprylic acid, octyl acid, myristic acid and naphthenic acid), and the like.
A particularly preferred group of trimerisation catalysts are alkali metal salts of carboxylic acids, such as potassium acetate or potassium 2-ethylhexanoate.

The amount of the trimerisation catalyst used is preferably between 0.02 and 1 wt% based on the whole formulation, more preferably between 0.1 and 0.2 wt%.

Preferably the catalyst is dissolved in the isocyanate-reactive compound to achieve storage stability.

The compositions of the present invention may include other optional components such as additives typically used in adhesive compositions, e.g., wetting agents, dispersing aids, thickeners, surfactants, pigments, mineral fillers, adhesion promotors (such as compounds containing silanyl groups), defoaming agents and antimicrobial agents.

The polyisocyanate, the isocyanate-reactive compound and the trimerisation catalyst are compounded and the mixture is used an an adhesive by, for example, coating on an adherend.

As an applicator of an adhesive according to the present invention there can be mentioned known applicators such as airless spray machine, air spray machine, immersion, roll coater, brush and the like.

The conditions used for lamination using an adhesive according to the invention are preferably 20 to 150°C, particularly preferably 60 to 100°C.

In producing a laminated film by using the present adhesive, the film used is not critical. As the film, there can be mentioned a film of polyester type such as polyethylene terephthalate or the like; a film of polyolefin type such as polyethylene, polypropylene or the like; a film of polyamide type such as nylon or the like; a metal foil such as aluminum foil, copper foil or the like; an ethylene-vinyl acetate copolymer or a saponification product thereof; a cellophane; a polyvinyl chloride; a polyvinylidene chloride; a polystyrene; a paper; and so forth. There can also be suitably used stretched products thereof and surface-treated (e.g. corona discharge-treated or surface-coated) products thereof.

The adhesive of the present invention can be suitably used for lamination not only between two film layers but also between three or more film layers.

The various aspects of this invention are illustrated, but not limited by the following

### examples.

In these examples the following ingredients were used:
Iso 1: MDI variant of NCO value 32.8 % and softblock content 0.6 %
Iso 2: prepolymer of NCO value 6.8 %, based on MDI and a polyether polyol of MW 6000, softblock content 75.1 %
Iso 3: 4,4-MDI, softblock content 0 %
Iso 4: prepolymer of NCO value 19 %, based on MDI and a polyester polyol of MW 2000, softblock content 37.0 %
Iso 5: MDI variant of NCO value 32.8 %, softblock content 0.6 %
Iso 6: prepolymer of NCO value 10.2 %, based on MDI and a polyether polyol of MW 4000, softblock content 65.47 %
Iso 7: MDI variant of NCO value 29.6 %, softblock content 0 %
Iso 8: prepolymer of NCO value 23 %, based on MDI and a polyether polyol of MW 125, softblock content 10.5 %
Iso 9: prepolymer of NCO value 21.4 %, based on MDI mixture and a polyether polyol mixture, softblock content 22.3 %
Iso 10: prepolymer of NCO value 24.5 %, based on MDI and a polyether polyol of MW 125, softblock content 5.17 %
Iso 11: prepolymer of NCO value 16 %, based on MDI and polyether polyols of MW 125 and 2000, softblock content 42.53 %
Iso 12: prepolymer of NCO value 15 %, based on MDI and a polyether polyol of MW 2000, softblock content 48.7 %
Iso 13: prepolymer of NCO value 15.4 %, based on MDI and a polyether polyol of MW 2000, softblock content 47.9 %
Iso 14: prepolymer of NCO value 16 %, based on MDI and a polyether polyol of MW 2000, softblock content 44.3 %
Iso 15: prepolymer of NCO value 15.5 %, based on MDI and polyether polyols of MW 2000 and 2400, softblock content 48 %
Iso 16: prepolymer of NCO value 28.8 %, based on MDI and a polyether polyol of MW 750, softblock content 3 %
Iso 17: MDI variant of NCO value 31.3 %, softblock content 0 %
Iso 18: MDI variant of NCO of NCO value 32.7 %, softblock content 0 %
Iso 19: a mixture of 70 wt% 4,4-MDI and 30 wt% 2,4-MDI, softblock content 0 %
Iso 20: a mixture of 50 wt% 4,4-MDI and 50 wt% 2,4-MDI, softblock content 0 %
Iso 21: MDI variant of NCO value 29.6 %, softblock content 0 %
Polyol 1: polyether polyol of MW 4360
Polyol 2: polyether polyol of MW 2000
Polyol 3: polyether polyol of MW 1300
Polyol 4: polyether polyol of MW 673
Polyol 5: polyester polyol of MW 2500
Polyol 6: polybutadieen polyol of MW 2800
Catalyst LB: metal salt trimerisation catalyst available from Huntsman Polyurethanes

### EXAMPLE 1

In this example the influence of the miscibility of the system on adhesive strength was tested.
In one trial Iso 10 was cured with the different polyols indicated in Table 1 below in a weight ratio 50:50 in the presence of Catalyst LB in an amount of 0.2 wt%.
The maximum stress (in MPa) was determined according to standard EN 204-205.
The miscibility was determined by visual inspection: + indicating a clear solution after good mixing and - indicating a non-clear solution after good mixing.

**Table 1**

| Polyol | Miscibility | Max Stress |
|---|---|---|
| Polyol 1 | + | 9.8 |
| Polyol 2 | + | 8 |
| Polyol 6 | - | 6.8 |
| Polyol 5 | - | 1.7 |

In a similar trial Iso 8 was used instead of Iso 10. Results are indicated in Table 2.

**Table 2**

| Polyol | Miscibility | Max Stress |
|---|---|---|
| Polyol 1 | - | 0.3 |
| Polyol 2 | + | 10 |
| Polyol 6 | - | 4.6 |
| Polyol 5 | + | 8.5 |

Both these tests show that the miscibility has a dramatic impact on the performance of the system as an adhesive.

### EXAMPLE 2

In this example the influence of softblock content on the adhesion properties was tested.
A screening of several polyisocyanates in combination with Polyol 1 in a weight ratio of 19:1 was done (100 pbw of polyisocyanate and 5 pbw ofpolyol).
The two components were mixed (in the presence of Catalyst LB in an amount of 0.2 wt%) and applied as an adhesive for a steel/steel joint of 80 µ thickness which was afterwards cured in an oven at 80°C for 1 hour. After cooling and conditioning to normal climate conditions the adhesion properties were measured according to standard EN 204-205. Cohesion Failure (CF) means that the interfacial strength > cohesive strength. Adhesion failure (AF) means that the cohesion failure > interfacial failure.

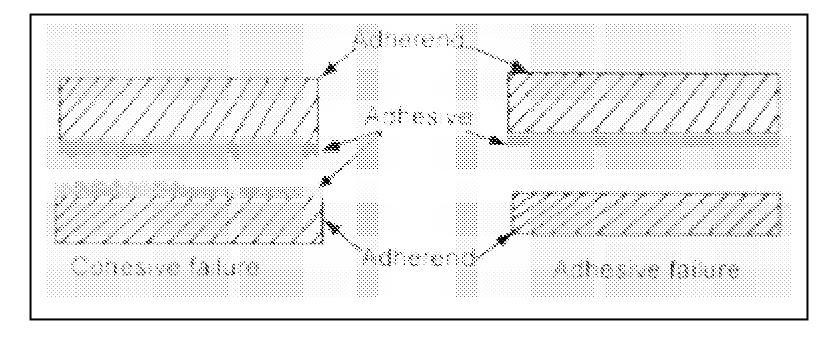

Results are presented in Table 3. The softblock content of the formulation is also indicated.
These results clearly show that the optimum softblock content is in the range 40 to 60 wt%.

**Table 3**

| Polyisocyanate | Softblock (wt %) | Max Stress (MPa) | Failure |
|---|---|---|---|
| Iso 7 | 4.8 | 1.4 | AF |
| Iso 17 | 4.8 | 1.7 | CF |
| Iso 18 | 4.8 | 1.6 | CF |
| Iso 20 | 4.8 | 1.2 | CF |
| Iso 21 | 4.9 | 1.6 | AF |
| Iso 1 | 5.3 | 1.5 | CF |
| Iso 5 | 5.3 | 1.5 | CF |
| Iso 16 | 7.6 | 1.4 | CF |
| Iso 8 | 14.8 | 1.8 | AF |
| Iso 9 | 27.3 | 4.6 | AF |
| Iso 4 | 40.4 | 11.6 | AF |
| Iso 14 | 47 | 11 | CF |
| Iso 13 | 50.4 | 10.6 | CF |
| Iso 15 | 50.5 | 10 | AF |
| Iso 12 | 51.1 | 10.2 | CF |
| Iso 6 | 67.1 | 4.1 | AF |
| Iso 2 | 76.3 | 1.2 | AF |

### EXAMPLE 3

Also here the influence of softblock content on adhesive strength was tested by adding various amounts of Polyol 1 to Iso 10 in the presence of Catalyst LB in an amount of 0.2 wt%. Results are presented in Table 4.

**Table 4**

| Ratio isocyanate/polyol | MDI (wt %) | Softblock (wt %) | Max Stress (MPa) | Failure |
|---|---|---|---|---|
| 19/1 | 90.3 | 9.7 | 3.4 | AF |
| 3/1 | 71.3 | 28.7 | 4.1 | AF |
| 1/1 | 47.4 | 52.6 | 10.3 | CF |
| 0.5/1 | 31.6 | 68.4 | 2.7 | AF |

### EXAMPLE 4

In this example the improvement in curing rate between the polyisocyanurate-based adhesive systems of the present invention and the polyurethane-based adhesives of the prior are was tested.

Iso 3, Iso 19 and Iso 20 were each reacted with polypropylene glycol of MW 2000 (PPG 2000) to obtain prepolymers with an NCO value of 16 wt%. Those prepolymers as well as Iso 11 and Iso 15 were cured with castor oil (ratio 105:100) for 10 days at normal climate conditions. Afterwards the obtained films were stored for 10 days at 50°C in an acid solution (3% acetic acid in a water solution). The solution was submitted to analytical for determination of the remaining aromatic amines (DADPM).
The results are given in Table 5.

**Table 5**

| Prepolymer | % Polymer in prepolymer | % Free di-iso in prepolymer | Remaining DADPM (ppb) |
|---|---|---|---|
| Iso 3 + PPG 2000 | 58.2 | 41.8 | 7 |
| Iso 19 + PPG 2000 | 58.2 | 41.8 | 23 |
| Iso 11 | 38.2 | 61.8 | 26 |
| Iso 20 + PPG 2000 | 58.2 | 41.8 | 16 |
| Iso 15 | 60.5 | 39.5 | 10 |

These results show that only some of the standard polyurethane-based adhesives fulfil the legal requirement of a maximum migration of 20 ppb of aromatic amines even after 10 days of cure. The system based on Iso 15 meets the legal requirements but a minimum of 10 days storage is needed; the measurement after 7 days storage yielded 72 ppb aromatic amines.

Polyisocyanurate-based adhesives according to the present invention were also evaluated for their decay in emission of aromatic amines. In this test Iso 4 and Iso 15 were used respectively as the polyisocyanate and both cured with Polyol 4 and Polyol 3 (ratio 3/1) in the presence of 0.01 wt% potassium hydroxide. The castings were cured for 30 minutes at 80°C, cooled down to room temperature and within 4 hours stored for 10 days at 50°C in the test solution mentioned above. Afterwards the amount of aromatic amines was determined in the solution.

For the system based on Iso 4 the result was 13.5 ppb, for the system based on Iso 15 it was 12.7 ppb. Hence both systems fulfilled the legal requirements within a day after processing. This could result in a major cost saving in the reduction of working capital and stock.

## Claims

1. Polyisocyanate based adhesive obtainable by reacting an organic polyisocyanate with a compound containing isocyanate-reactive hydrogen atoms in the presence of a trimerisation catalyst.

2. Adhesive according to claim 1 wherein the organic polyisocyanate and the compound containing isocyanate-reactive hydrogen atoms are miscible with each other.

3. Adhesive according to any one of claims 1 or 2 wherein the softblock content of the adhesive is between 20 and 70 % by weight, preferably between 40 and 60 wt%.

4. Adhesive according to any one of the preceding claims wherein the organic polyisocyanate is a semi-prepolymer or a prepolymer which may be obtained by reacting polyisocyanates with compounds containing isocyanate-reactive hydrogen atoms.

5. Adhesive according to any one of the preceding claims wherein the trimerisation catalyst is used in an amount of 0.02 to 1 % by weight based on the total formulation, preferably between 0.1 and 0.2 wt%.

6. Adhesive according to any one of the preceding claims wherein the trimerisation catalyst is an alkali metal salt of a carboxylic acid.

7. Reaction mixture for preparing a polyisocyanate based adhesive as defined in any one of the preceding claims comprising an organic polyisocyanate, a compound containing isocyanate-reactive hydrogen atoms and a trimerisation catalyst.

8. Use of the polyisocyanate based adhesive as defined in any one of the preceding claims to produce a laminated film.

9. Use of the polyisocyanate based adhesive as defined in any one of the preceding claims to produce a structural adhesive.
